# EUROPEAN PATENT APPLICATION

(11) **EP 3 761 069 A1**
(43) Date of publication of application: **06.01.2021**
(21) Application number: 18908147.4
(22) Date of filing: 28.02.2018
(51) Int. Cl.: G01W 1/12

(54) **INFORMATION PROCESSING DEVICE AND PROGRAM**

(71) Applicant: Honda Motor Co., Ltd., Tokyo 107-8556 (JP)
(72) Inventor: MURO, Keiji, Wako-shi, Saitama 351-0193 (JP); KAMEYAMA, Naoki, Wako-shi, Saitama 351-0193 (JP); SHIMAMURA, Hideaki, Wako-shi, Saitama 351-0193 (JP)
(74) Representative: Herzog, Markus
(86) International application number: PCT/JP2018/007662
(87) International publication number: WO 2019/167208

(57) **Abstract**

It properly manages a growing state of a plant with a simple method. An information processing apparatus includes an image obtaining section to obtain, from an image capturing section configured to capture a work region where a plant is grown, data of an image of a work region and a sunshine condition determination section configured to analyze data obtained by a image obtaining section and determine a sunshine condition in each of a plurality of subareas included in a work region.

## Description

### BACKGROUND

### 1. TECHNICAL FIELD

The present invention relates to an information processing apparatus and a program.

### 2. RELATED ART

In recent years, a work machine which estimates the self-location using a GPS signal and autonomously travels inside a predetermined region has been developed (for example, see Patent document 1 or 2).

### [Prior Art Document]

### [Patent document]

[Patent document 1] Japanese Unexamined Patent Application, Publication No. 2016-185099
[Patent document 2] Japanese Unexamined Patent Application, Publication No. 2013-223531

### [Problem to be solved]

There is a demand to appropriately manage the growing condition of a plant with an easy and convenient method when an autonomously traveling work machine is used to grow the plant.

In a first aspect of the present invention, an information processing apparatus is provided. For example, the above-described information processing apparatus includes an image obtaining section to obtain, from a image capturing section which captures at least part of a work region where a plant is grown, data of an image of at least part of the work region. For example, the above-described information processing apparatus includes a sunshine condition determination section to determine a sunshine condition in each of a plurality of subareas included in at least part of a work region by analyzing data obtained by the image obtaining section.

The above-described information processing apparatus may includes a map generation section to generate map information which associates identification information indicating each of a plurality of subareas and information indicating a sunshine condition in the subarea based on the sunshine condition in each subarea of the work region determined by the sunshine condition determination section. The above-described information processing apparatus may include a work schedule generation section to generate a work schedule information which associates (i) identification information indicating each of a plurality of subareas, (ii) a timing when a work related to growing plant is performed in the subarea, and (iii) at least one of a type and intensity of the work in the subarea, based on a sunshine condition in each subarea of the work region determined by the sunshine condition determination section. In the above-described information processing apparatus, the type of work may be at least one of seeding, pruning, lawn mowing, grass cutting, watering, fertilizing, soiling, and weeding.

The above-described information processing apparatus may includes a growing condition obtaining section to obtain information indicating a real growing condition of a plant in at least one of a plurality of subareas. In the above-described information processing apparatus, the work schedule generation section may update work schedule information based on the information obtained by the growing condition obtaining section. In the above-described information processing apparatus, the information indicating a real growing condition of the plant may be the information indicating a load of a work section which is mounted to an autonomously moving work machine and performs a work. The above-described information processing apparatus may include a control section to control a work machine which performs a work in a work region based on work schedule information generated by the work schedule generation section.

In a second aspect of the present invention, a program is provided. For example, the above-described program is a program to enable a computer to function as the above-described information processing apparatus.

For example, the above-described program is a program to enable a computer to perform an image obtaining step to obtain data of an image of at least part of a work region from an image capturing section which captures at least part of the work region where a plant is grown. For example, the above-described program is a program to enable a computer to perform a sunshine condition determining step to determine a sunshine condition in each of a plurality of subareas included in at least part of the work region by analyzing data obtained in the image obtaining step.

A computer-readable medium having stored thereon the above-described program may be provided. The computer-readable medium may be a non-transitory computer-readable medium. The computer-readable medium may be a computer readable recording medium.

The summary clause does not necessarily describe all necessary features of the embodiments of the present invention. The present invention may also be a sub-combination of the features described above.

### BRIEF DESCRIPTION OF THE DRAWINGS

Fig. 1 schematically shows one example of an internal configuration of an information processing apparatus 120.
Fig. 2 schematically shows one example of a system configuration of a management system 200.
Fig. 3 schematically shows one example of an internal configuration of a lawn mower 210.
Fig. 4 schematically shows one example of an internal configuration of a control unit 380.
Fig. 5 schematically shows one example of an internal configuration of a management server 230.

### DESCRIPTION OF EXEMPLARY EMBODIMENTS

Hereinbelow, the present invention will be described through embodiments of the invention, but the following embodiments do not limit the invention disclosed in claims. In addition, not all combinations of features described in the embodiments are necessarily essential to the solution of the invention. Note that in the drawings, the same reference numbers may be applied to the same or similar portions and the redundant descriptions may be omitted in some cases. In addition, two or more elements which each have the same name and have different reference numbers may have the configuration similar to each other as long as there is no technically serious contradiction.

### [Outline of the information processing apparatus 120]

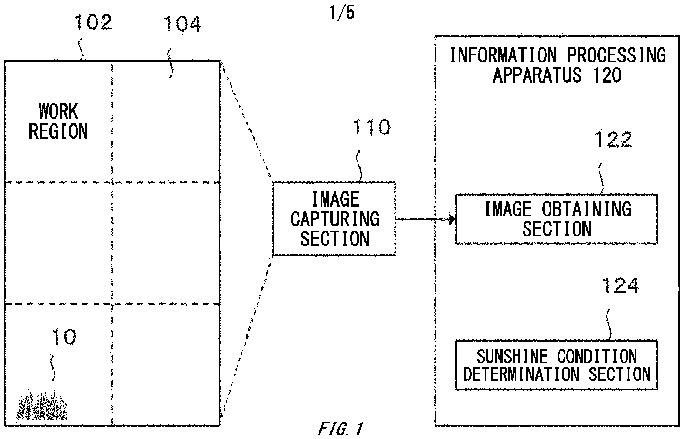

Fig. 1 schematically shows one example of an internal configuration of the information processing apparatus 120 in one embodiment. In the present embodiment, the information processing apparatus 120 includes, for example, an image obtaining section 122. The information processing apparatus 120 may include a sunshine condition determination section 124. In the present embodiment, the information processing apparatus 120 determines a sunshine condition in each location inside a work region 102 where a plant 10 is cultivated.

Inside the work region 102, a work is performed to grow the plant 10. The location and range of the work region 102 is not specifically limited. The range of the region may represent the size and shape of the region. The work region 102 may have any geographic range. The work region 102 may have a predetermined geographic range. Examples of a type of a work to grow the plant 10 include seeding, pruning, lawn mowing, grass cutting, watering, fertilizing, soiling, weeding, and the like.

In the present embodiment, a plurality of the subareas 104 is included inside the work region 102. The subareas 104 may include a region which is separated by a physical geographical boundary or may be a region which is separated by a virtual geographical boundary.

Examples of the physical geographical boundary include (i) a boundary defined by a structure formed naturally or artificially, (ii) a boundary defined by sprayed chemicals, (iii) a boundary defined by electromagnetic wave such as visible light, infrared light, ultraviolet light, and the like, (iv) a boundary defined by magnetic field, (v) a boundary defined by acoustic wave or ultrasonic sound wave, and the like. Examples of a structure formed naturally include a dent, a step, a slope, lake and reservoir, river, and the like. Examples of a structure formed artificially include a lane, a groove, a tunnel, a building, wire, a rope, a fence, a net, a Braille block, and the like. Examples of the virtual geographical boundary include a geofence, a virtual wire, and the like. The virtual wire may be a geographical boundary indicated by a virtual line set between a plurality of structural body.

The quantity of the subarea 104 included inside the work region 102 and a size and shape of the subarea 104 are not specifically limited. However, a plurality of the subareas 104 is preferably arranged uniformly inside the work region 102 such that there is no overlapped placement and no lack of placement. The plurality of subareas 104 may each have the same size or different size. The plurality of subareas 104 may each have the same shape or different shape.

The quantity of the subarea 104 arranged inside the work region 102 may be constant or variable. For example, a quantity of the subareas 104 arranged in a particular region which constitutes a part of the work region 102 is changed in response to occurrence of a predetermined event. Specifically, a plurality of the subareas 104 which are arranged adjacent to each other may be virtually combined to form a single subarea 104. The single subarea 104 may be virtually divided into a plurality of the subareas 104 which is arranged adjacent to each other. The quantity of the subarea 104 arranged in a specific region inside the work region 102 may be adjusted depending on a required estimation precision.

### [Outline of each section of the information processing apparatus 120]

In the present embodiment, the image obtaining section 122 obtains, from an image capturing section 110 which captures at least part of the work region 102, data of an image of at least part of the work region 102. In the present embodiment, the sunshine condition determination section 124 analyzes data obtained by the image obtaining section 122 and determines a sunshine condition in each of a plurality of subareas 104 included in at least part of the work region 102.

### [Specific configuration of each section of the information processing apparatus 120]

Each section of the information processing apparatus 120 may be realized with hardware, or may be realized with software, or may be realized with hardware and software. If at least part of components constituting the information processing apparatus 120 is realized with software, the components realized with the software may be realized by activating, in an information processing apparatus having a general configuration, software or a program stipulating operations about the components.

The above-described information processing apparatus may include: (i) a data processing apparatus having processors such as a CPU or a GPU, a ROM, a RAM, a communication interface and the like, (ii) an input apparatus such as a keyboard, touch panel, camera, microphone, various types of sensors or GPS receiver, (iii) an output apparatus such as a display apparatus, a speaker or a vibration apparatus, and (iv) a storage apparatus (including an external storage apparatus) such as a memory or a HDD. In the above-described information processing apparatus, the above-described data processing apparatus or storage apparatus may store the above-described program. The above-described program causes the information processing apparatus described above to perform the operations defined by this program, by being executed by the processor. The above-described program may be stored in a non-transitory computer readable recording medium.

The above-described program may be a program configured to enable a computer to function as the information processing apparatus 120. The above-described computer may be a computer which provides a cloud service or may be a computer which realizes a client server system. The above-described computer (i) may be a computer mounted to a work machine having an autonomous movement function or (ii) may be a computer which is present outside the work machine and is to control a work machine via a communication network.

The above-described program may be a program to enable a computer to perform one or more procedures related to various information processings in the information processing apparatus 120. The one or more procedures related to various information processings in the information processing apparatus 120 may include an image obtaining step to obtain, from an image capturing section which captures at least part of work region where a plant is grown, data of an image of at least part of a work region. The above-described procedure may include a sunshine condition determining step to analyze data obtained in the image obtaining step and determine a sunshine condition in each of a plurality of subareas included in at least part of the work region.

### [Outline of the Management System 200]

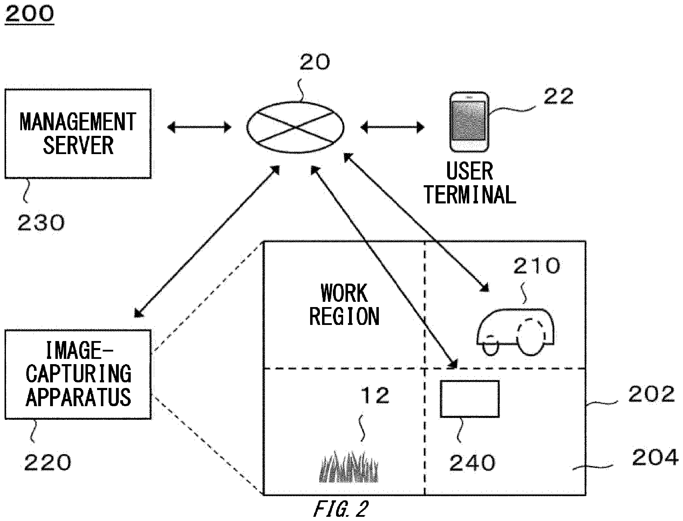

Fig. 2 schematically shows one example of the system configuration in the management system 200. In the present embodiment, the management system 200 includes one or more lawn mowers 210, one or more image-capturing apparatuses 220, the management server 230, and one or more watering apparatuses 240. The management system 200 may include one or more user terminals 22.

In the present embodiment, for a simple description, a detail of the management system 200 is described by using, as an example, a case in which the management server 230 uses data of an image captured by the lawn mower 210 and the image-capturing apparatus 220 to determine a sunshine condition in each section inside the work region 202 where the lawn 12 is cultivated. However, the management system 200 is not limited to the present embodiment. In another embodiment, at least one of the user terminal 22, the lawn mower 210, the image-capturing apparatus 220, the management server 230 and the watering apparatus 240 may utilize the image data captured by at least one of the lawn mower 210 and the image-capturing apparatus 220 to determine the sunshine condition in each section inside the work region 202.

In the present embodiment, a plurality of subareas 204 is included inside the work region 202. The subarea 204 may include a region which is separated by a physical geographical boundary or may be a region which is separated by a virtual geographical boundary. The work region 202 may include a configuration similar to that of the work region 102. The subarea 204 may have a configuration similar to that of the subarea 104.

The lawn 12 may be one example of the plant. The lawn mower 210 may be one example of the moving object and the work machine. The image-capturing apparatus 220 may be one example of the image capturing section. The user terminal 22 may be one example of the information processing apparatus. The lawn mower 210 may be one example of the information processing apparatus. The image-capturing apparatus 220 may be one example of the information processing apparatus. The management server 230 may be one example of the information processing apparatus. The watering apparatus 240 may be one example of the information processing apparatus.

Each section of the management system 200 may transmit and receive information with each other. For example, the lawn mower 210 transmits and receives information with at least one of the user terminal 22 and the management server 230 via the communication network 20. The lawn mower 210 may transmit and receive information with at least one of the image-capturing apparatus 220 and the watering apparatus 240 via the communication network 20.

The image-capturing apparatus 220 may transmit and receive information with at least one of the user terminal 22, the lawn mower 210, and the management server 230 via the communication network 20. The watering apparatus 240 may transmit and receive information with at least one of the user terminal 22, the lawn mower 210, and the management server 230 via the communication network 20.

In the present embodiment, the communication network 20 may be a wired communication transmission path, a wireless communication transmission path, or may be a combination of a wireless communication transmission path and a wired communication transmission path. The communication network 20 may include a wireless packet communication network, the Internet, a P2P network, a private line, a VPN, an electric power line communication line and the like. The communication network 20: (i) may include a mobile communication network such as a mobile phone line network; and (ii) may include a wireless communication network such as a wireless MAN (for example, WiMAX (registered trademark)), a wireless LAN (for example, WiFi (registered trademark)), Bluetooth (registered trademark), Zigbee (registered trademark) or NFC (Near Field Communication).

In the present embodiment, the user terminal 22 is a communication terminal utilized by a user of the management system 200 or the lawn mower 210, but the detail thereof is not specifically limited. Examples of the user terminal 22 include a personal computer, a mobile terminal, and the like. Examples of the mobile terminal include a mobile phone, a smartphone, a PDA, a tablet, a notebook computer, a laptop computer, a wearable computer, or the like.

In the present embodiment, the management system 200 manages the work region 202. For example, the management system 200 may manage a state of the object (also referred to as work target in some cases) on which a work is to be performed in the work region 202. The lawn 12 may be one example of the work target. The management system 200 may manage the work performed in the work region 202. For example, the management system 200 manages the schedule of the work. The work schedule may be the information which defines at least one of a period when the work is performed, a place where the work is performed, an entity which performs the work, a work target, and a content of the work.

In the present embodiment, the management system 200 manages the lawn mower 210. The lawn mower 210 may be one example of an entity which performs the work. For example, the management system 200 manages a state of the lawn mower 210. For example, the management system 200 manages a location, an advancing direction, an advancing speed, and a remaining energy level (for example, a remaining level of a battery) of the lawn mower 210, a schedule of the work performed by the lawn mower 210, and the like.

In the present embodiment, the management system 200 manages the image-capturing apparatus 220. For example, the management system 200 controls at least one of the image-capturing direction and the image-capturing condition of the image-capturing apparatus 220. In the present embodiment, the management system 200 manages a watering apparatus 240. For example, the management system 200 manages the schedule of the watering work which is performed by the watering apparatus.

It is noted that, in the present embodiment, for an easy description, the management system 200 is described in detail using an embodiment in which the management system 200 manages the lawn mower 210, the image-capturing apparatus 220 and the watering apparatus 240 as an example. However, the management system 200 is not limited to the present embodiment. In another embodiment, the management system 200 may not manage at least one of the lawn mower 210, the image-capturing apparatus 220, and the watering apparatus 240. In yet another embodiment, the management system 200 may manage another type of work machine different from the lawn mower 210, the image-capturing apparatus 220, and the watering apparatus 240.
Examples of the work performed by another type of work machine include seeding, pruning, fertilizing, soiling, weeding, snow clearing, cleaning, carrying, monitoring, security, guarding, and the like.

### [Outline of Each Section of Management System 200]

In the present embodiment, the lawn mower 210 has an autonomous movement function, and autonomously travels inside the work region 202. It is noted that the lawn mower 210 may move according the remote control by a user. The lawn mower 210 cuts the lawn 12 growing inside the work region 202. The lawn mower 210 may travel while cutting the lawn 12, or may travel without cutting the lawn 12. The lawn mower 210 will be described in detail later.

The lawn mower 210 may be one example of the work machine. The work machine is not limited to the lawn mower 210. The work machine may be a moving object traveling on the ground, may be a moving object flying in the air, or may be a moving object navigating under the water or on the water. Other examples of the work machine include a drone, a helicopter, a flying ship, and the like which flies in the air. The work machine may have an autonomous movement function.

In the present embodiment, the image-capturing apparatus 220 is placed inside or in the vicinity of the work region 202. The image-capturing apparatus 220 captures at least part of the work region 202. The image-capturing apparatus 220 transmits data of the captured image to the management server 230. The image-capturing apparatus 220 may transmit the information indicating at least one of the image-capturing direction and the image-capturing condition to the management server 230. The image-capturing apparatus 220 may perform various types of processes based on a control signal from the management server 230.

The image-capturing apparatus 220 may include an equipment to measure the weather condition in the location where the image-capturing apparatus 220 is placed. Examples of the weather condition include a temperature, a humidity, a wind speed, a wind direction, an illuminance, and the like. The image-capturing apparatus 220 may transmit the information indicating the weather condition in the location where the image-capturing apparatus 220 is placed to the management server 230.

The image-capturing apparatus 220 may include equipment to measure at least one of the amount of solar radiation and the illuminance in a location where the image-capturing apparatus 220 is placed. The image-capturing apparatus 220 may transmit the information indicating at least one of the amount of solar radiation and the illuminance in a location where the image-capturing apparatus 220 is placed to the management server 230.

In the present embodiment, the management server 230 manages the various types of information related to the work region 202. For example, the management server 230 manages the information which associates the area identification information identifying each of the plurality of subareas 204 and the illuminance parameter indicating the sunshine condition of the subarea 204 identified by the area identification information (also referred to as map information in some cases). The management server 230 may perform a process such as generating, updating, deleting, searching of the map information, and the like. The illuminance parameter may be one example of the information indicating the sunshine condition.

The management server 230 may manage the state of equipment which configures the management system 200. The management server 230 may control the operation of the equipment which configures the management system 200. The management server 230 may manage the growing condition of the lawn 12. The management server 230 may manage various types of work to be performed in the work region 202. For example, the management server 230 creates a schedule of the above-described various types of work. The management server 230 may manage the progress of schedule of the above-described various types of work. The management server 230 will be described in detail later.

In the present embodiment, the watering apparatus 240 supplies water to the work region 202. The watering apparatus 240 may supply the water in which a fertilizer component is resolved to the work region 202. The watering apparatus 240 may include a sprinkler to spray water inside the work region 202. The watering apparatus 240 may perform a watering work based on the control signal from the management server 230.

The watering apparatus 240 may include the equipment to measure the weather condition in a location where the watering apparatus 240 is placed. Examples of the weather condition include a temperature, humidity, a wind speed, a wind direction, and the like. The watering apparatus 240 may transmit the information indicating the weather condition in the location where the watering apparatus 240 is placed to the management server 230.

The watering apparatus 240 may include equipment to measure at least one of the amount of solar radiation and the illuminance in the location where the watering apparatus 240 is placed. The watering apparatus 240 may transmit the information indicating at least one of the amount of solar radiation and the illuminance in the location where the watering apparatus 240 is placed to the management server 230.

### [Specific Configuration of the Each Section of the Management System 200]

Each section of the management system 200 may be realized by the hardware, may be realized by the software, or may be realized by the hardware and software. At least a part of each section in the management system 200 may be realized by a single server, or realized by a plurality of servers. At least a part of each section in the management system 200 may be realized on a virtual server or a cloud system. At least a part of each section in the management system 200 may be realized by a personal computer or a mobile terminal. Examples of the mobile terminal include a mobile phone, a smartphone, a PDA, a tablet, a notebook computer, a laptop computer, a wearable computer, or the like. The management system 200 may store information by utilizing a distributed ledger technology or a distributed network such as a block chain.

If at least a part of components constituting the management system 200 is realized by a software, the component realized by the software may be realized by activating a program which defines the operation related to the component in an information processing apparatus with a general configuration. The above-described information processing apparatus may include: (i) a data processing apparatus having processors such as a CPU or a GPU, a ROM, a RAM, a communication interface and the like, (ii) an input apparatus such as a keyboard, touch panel, camera, microphone, various types of sensors or GPS receiver, (iii) an output apparatus such as a display apparatus, a speaker or a vibration apparatus, and (iv) a storage apparatus (including an external storage apparatus) such as a memory or a HDD. In the above-described information processing apparatus, the above-described data processing apparatus or storage apparatus may store the above-described program. The above-described program causes the information processing apparatus described above to perform the operations defined by this program, by being executed by the processor. The above-described program may be stored in a non-transitory computer readable recording medium.

The above-described program may be a program which allows a computer to perform one or more procedures related to various types of information processing in the management system 200. The above-described computer may be a computer mounted on at least one of the user terminal 22, the lawn mower 210, the image-capturing apparatus 220, the management server 230, and the watering apparatus 240.

### [Outline of the Lawn Mower 210]

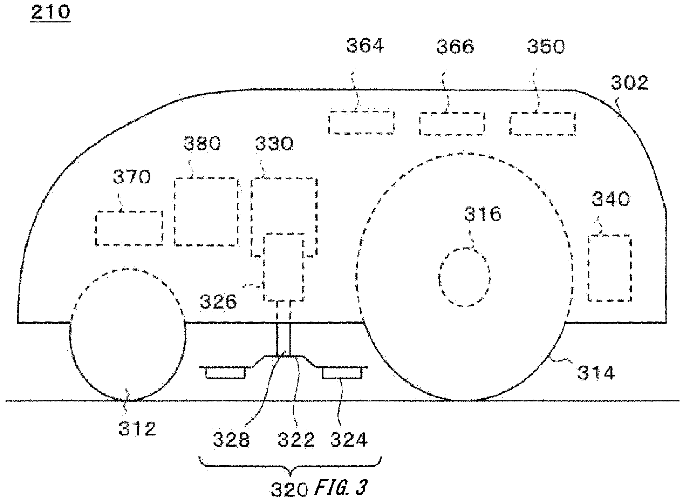

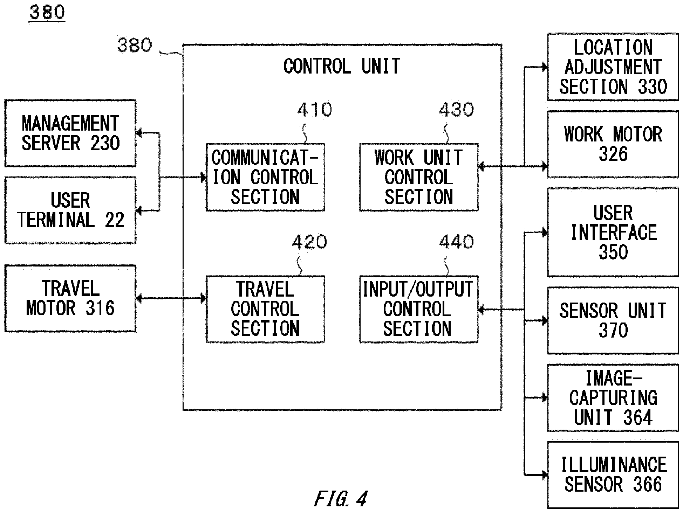

An outline of the lawn mower 210 is described using Fig. 3 and Fig. 4. Fig. 3 schematically shows one example of the internal configuration of the lawn mower 210. In the present embodiment, the lawn mower 210 includes the housing 302. In the present embodiment, the lawn mower 210 includes pair of the front wheel 312 and a pair of the rear wheels 314 under the housing 302. The lawn mower 210 may include a pair of travel motors 316 which respectively drive a pair of rear wheels 314.

In the present embodiment, the lawn mower 210 includes the work unit 320. The work unit 320 includes, for example, the blade disk 322, the cutter blade 324, the work motor 326, and the shaft 328. The lawn mower 210 may include the location adjustment section 330 which adjusts the location of the work unit 320.

The blade disk 322 is linked to the work motor 326 via the shaft 328. The cutter blade 324 may be a blade to cut the lawn. The cutter blade 324 is attached to the blade disk 322 and rotates with the blade disk 322. The work motor 326 rotates the blade disk 322. The blade disk 322 and the cutter blade 324 may be one example of a cutting member to cut the work target.

In the present embodiment, the lawn mower 210 includes the battery unit 340, the user interface 350, the image-capturing unit 364, the illuminance sensor 366, the sensor unit 370, and the control unit 380 inside the housing 302 or on the housing 302. The image-capturing unit 364 may be one example of the image capturing section. The control unit 380 may be one example of the control section.

In the present embodiment, the battery unit 340 supplies electric power to each section of the lawn mower 210. In the present embodiment, the user interface 350 accepts a user input. The user interface 350 outputs information to a user. Examples of the user interface 350 include a keyboard, a pointing device, a microphone, a touch panel, a display, a speaker, and the like.

In the present embodiment, the image-capturing unit 364 captures the image of the circumference of the lawn mower 210. The image-capturing unit 364 may capture the image of at least part of the work region 202. The image-capturing unit 364 may transmit data of the captured image to the management server 230. The image-capturing unit 364 may transmit the information indicating at least one of the image-capturing direction and the image-capturing condition to the management server 230. The image-capturing unit 364 may perform various types of processing based on the control signal from the control unit 380.

The image-capturing unit 364 may include equipment to measure the weather condition around the lawn mower 210. Examples of the weather condition include a temperature, humidity, a wind speed, a wind direction, and the like. The image-capturing unit 364 may transmit the information indicating the weather condition around the image-capturing unit 364 to the management server 230.

The illuminance sensor 366 measures the illuminance on the top surface of the lawn mower 210. The illuminance sensor 366 measures the amount of solar radiation on the top surface of the lawn mower 210. The illuminance sensor 366 may transmit the output data to the management server 230.

In the present embodiment, the sensor unit 370 includes various types of sensors. In the present embodiment, the sensor unit 370 includes various types of sensors. The sensor unit 370 may include various types of external sensors. Examples of sensors include a millimeter wave sensor, a proximity detection sensor, an acceleration sensor, an angular velocity sensor, a wheel speed sensor, a load sensor, an idling detection sensor, a magnetic sensor, a geomagnetic sensor (also referred to as orientation sensor, electronic compass, and the like in some cases), a soil moisture sensor, and the like. The sensor unit 370 may transmit the output from various types of sensors to the control unit 380.

In the present embodiment, the control unit 380 controls the operation of the lawn mower 210. According to one embodiment, the control unit 380 controls a pair of the travel motor 316 to control the movement of the lawn mower 210. According to another embodiment, the control unit 380 controls the work motor 326 to control the work of the lawn mower 210.

The control unit 380 may control the lawn mower 210 based on the instruction from the management server 230. It may control the lawn mower 210 based on the information indicating the work schedule generated by the management server 230. The control unit 380 may control the lawn mower 210 according to the instruction generated by the management server 230. The control unit 380 will be described in detail later.

Fig. 4 schematically shows one example of an internal configuration of the control unit 380. In the present embodiment, the control unit 380 includes the communication control section 410, the travel control section 420, the work unit control section 430, and the input/output control section 440.

In the present embodiment, the communication control section 410 controls communication with the equipment located outside the lawn mower 210. The communication control section 410 may be a communication interface compatible with one or more communication scheme. Examples of the outside equipment include the user terminal 22, the image-capturing apparatus 220, the management server 230, the watering apparatus 240, and the like.

In the present embodiment, the travel control section 420 controls the travel motor 316 to control movement of the lawn mower 210. The travel control section 420 controls the autonomous travel of the lawn mower 210. For example, the travel control section 420 controls at least one of a movement mode, an advancing speed, an advancing direction, and a moving route of the lawn mower 210. The travel control section 420 may monitor the current value of the travel motor 316.

In the present embodiment, the work unit control section 430 controls the work unit 320. The work unit control section 430 may control at least one of a work mode, a type of work, work intensity, and timing when the work is performed of the work unit 320. For example, the work unit control section 430 controls the work motor 326 and controls work intensity of the work unit 320. The work unit control section 430 may control the location adjustment section 330 to control work intensity of the work unit 320. The work unit control section 430 may monitor the current value of the work motor 326.

In the present embodiment, the input/output control section 440 accepts the input from at least one of the user interface 350, the image-capturing unit 364, the illuminance sensor 366, and the sensor unit 370. The input/output control section 440 outputs information to the user interface 350. The input/output control section 440 may control at least one of the user interface 350, the image-capturing unit 364, the illuminance sensor 366, and the sensor unit 370.

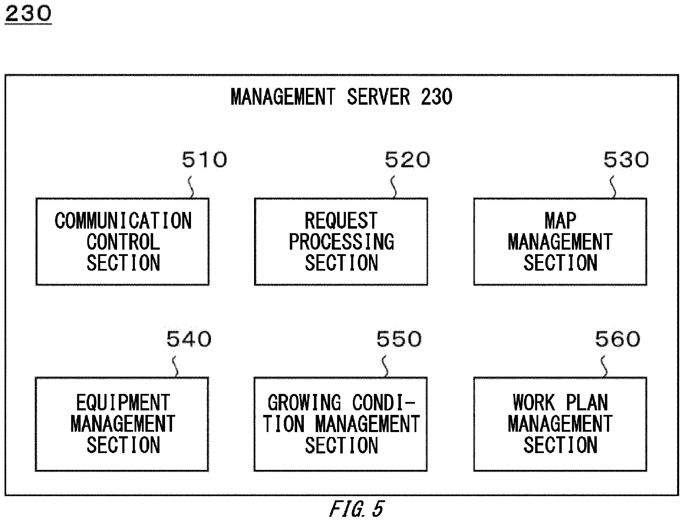

Fig. 5 schematically shows one example of the internal configuration of the management server 230. In the present embodiment, the management server 230 includes a communication control section 510, a request processing section 520, a map management section 530, an equipment management section 540, a growing condition management section 550, and a work plan management section 560.

The map management section 530 may be one example of the information processing apparatus, the image obtaining section, the sunshine condition determination section, and the map generation section. The work plan management section 560 may be one example of the work schedule generation section.

In the present embodiment, the communication control section 510 controls communication with the equipment outside the management server 230. The communication control section 510 may be a communication interface compatible with one or more communication scheme. Examples of the external equipment include the user terminal 22, the lawn mower 210, the image-capturing apparatus 220, the watering apparatus 240, and the like. In the present embodiment, the request processing section 520 accepts the request from the external equipment. The request processing section 520 processes the request from the external equipment.

In the present embodiment, the map management section 530 manages the map information. For example, the map management section 530 performs the process such as generating, updating, deleting, and searching of the map information. In one embodiment, the map management section 530 manages the map information of all the subareas 204 included in the work region 202. In another embodiment, for the subarea 204 which is a part of the subareas 204 included in the work region 202, the map management section 530 manages the map information of the subarea.

In the present embodiment, the map management section 530 obtains, from the lawn mower 210, the data of the image of at least a part of the work region 202 captured by the image-capturing unit 364. The map management section 530 may obtain, from the lawn mower 210, the information indicating the date and time when the image was captured. The map management section 530 may obtain, from the lawn mower 210, the information indicating the weather condition when the image was captured.

In the present embodiment, the map management section 530 obtains, from the image-capturing apparatus 220, the data of the image of at least a part of the work region 202 captured by the image-capturing apparatus 220. The map management section 530 may obtain, from the image-capturing apparatus 220, the information indicating the date and time when the image was captured. The map management section 530 may obtain, from the image-capturing apparatus 220, the information indicating the weather condition when the image was captured.

The map management section 530 may obtain the data indicating at least one of the amount of solar radiation and the illuminance on the top surface of the lawn mower 210 from the illuminance sensor 366 of the lawn mower 210. The map management section 530 may obtain, from the image-capturing apparatus 220, the data indicating at least one of the amount of solar radiation and the illuminance in the location where the image-capturing apparatus 220 is placed. The map management section 530 may obtain, from the watering apparatus 240, the data indicating at least one of the amount of solar radiation and the illuminance in the location where the watering apparatus 240 is placed.

In the present embodiment, for each of a plurality of subareas 204 included in the work region 202, the map management section 530 determines the sunshine condition in the subarea. For example, for each of a plurality of subarea 204 included in the work region 202, the map management section 530 calculates the illuminance parameter indicating the sunshine condition in the subarea. As one example of the illuminance parameter, (i) the statistical value of the amount of solar radiation [W/m²] in a predetermined period, (ii) the statistical value of the sunshine duration [hour/day] in a predetermined period, (iii) the statistical value of the accumulated amount of solar radiation [MJ/m²] per unit period in a predetermined period, and the like are exemplified.

The sunshine duration is defined as a period in which an amount of immediate solar radiation measured by a sunshine meter is equal to or more than a predetermined threshold in one day. The predetermined threshold is, for example, 120 W/m². It is noted that the predetermined threshold may be different depending on countries or regions. Examples of a predetermined period include one week, 10 days, one month, three months, six months, and the like. Examples of unit period include one hour, three hours, six hours, nine hours, one day, one week, 10 days, one month, and the like.

The illuminance parameter may be represented with continuous values or may be represented with a stepwise segmentation. For example, the illuminance parameter represented with continuous values is evaluated with n-step evaluations (n is an integer equal to or greater than two), an evaluation function, a learning device, and the like so that the illuminance parameter is represented with a stepwise segmentation.

The map management section 530 may calculate the illuminance parameter for each predetermined period. The map management section 530 may calculate the illuminance parameter of each subarea for each type of weather. Examples of the type of weather include sunny, cloudy, rainy, snowy, and the like.

It is noted that as long as the illuminance parameter may be a parameter related to the amount of solar radiation or the sunshine duration, the calculation method of it is not specifically limited. As another example of the illuminance parameter, (iv) the statistical value of ratio (A/B) of (A) the amount of solar radiation of the target subarea 204 [W/m²] to (B) the amount of solar radiation at a particular point inside or in the vicinity of the particular subarea 204 or the work region 202 in a predetermined period [W/m²], (v) the statistical value of the ratio (C/D) of (C) the sunshine duration of the target subarea 204 [hour/day] to (D) the sunshine duration at a particular point inside or in the vicinity of the particular subarea 204 or the work region 202 in a predetermined period [hour/day], (vi) the statistical value of the ratio (E/F) of (E) the accumulated amount of solar radiation per unit period of the target subarea 204 [MJ/m²] to (F) the accumulated amount of solar radiation per unit period at a particular point inside or in the vicinity of the particular subarea 204 or the work region 202 in a predetermined period [MJ/m²], and the like.

The illuminance parameter may be calculated based on a combination of at least one of the amount of solar radiation, the sunshine duration, and the accumulated amount of solar radiation per unit period, and another factor related to the weather condition. Examples of another factor related to the weather condition include the type of weather, the temperature, the humidity, the wind speed, the wind direction, and the like.

The map management section 530 may analyze each of a plurality of images captured by the lawn mower 210 and the image-capturing apparatus 220 to calculate the illuminance parameter. The map management section 530 may calculate the illuminance parameter based on the analysis result of a plurality of images captured by at least one of the lawn mower 210 and the image-capturing apparatus 220, and the data indicating at least one of the amount of solar radiation and the illuminance obtained by at least one of the illuminance sensor 366 of the lawn mower 210, the image-capturing apparatus 220, and the watering apparatus 240.

In one embodiment, the map management section 530 first analyzes each of a plurality of images captured by the lawn mower 210 and the image-capturing apparatus 220 to recognize one or more subareas 204 in each image. The map management section 530 may identify the identification information and the location and range in each image for each of one or more subareas 204 included in each image. Then, the map management section 530 determines the brightness of each of one or more subareas 204 included in each image. The brightness in each of one or more subareas 204 may be represented with continuous values or may be represented with a stepwise segmentation.

Thereby, for each of a plurality of subareas 204 included in the work region 202, the database which associates the identification information of the subarea and the information indicating the brightness of the subarea is created. The map management section 530 can calculate various types of sunshine parameters based on the information stored in the above-described database.

In another embodiment, the map management section 530 first analyzes each of a plurality of images captured by the lawn mower 210 and the image-capturing apparatus 220 and divides each image into a plurality of regions based on a level of brightness. Then, the map management section 530 recognizes one or more subareas 204 included in each of a plurality of regions of each image. The map management section 530 may identify the identification information of each of one or more subareas 204 included in each region. For each of one or more subareas 204 included in each region, the map management section 530 may calculate a ratio of the area of a part included in the region to the area of the subarea.

Thereby, for each of a plurality of subareas 204 included in the work region 202, the database which associates the identification information of the subarea and the information indicating the brightness of the subarea is created. The map management section 530 can calculate various types of sunshine parameters based on the information stored in the above-described database.

In the present embodiment, the equipment management section 540 manages various types of equipment which configure the management system 200. For example, the equipment management section 540 controls at least one of the lawn mower 210, the image-capturing apparatus 220, and the watering apparatus 240. The equipment management section 540 may manage the information related to the various types of equipment related to the management system 200. For example, the equipment management section 540 obtains, from at least one of the lawn mower 210, the image-capturing apparatus 220, and the watering apparatus 240, the information related to the state of the equipment. The equipment management section 540 may manage the information related to the user terminal 22.

In the present embodiment, the growing condition management section 550 manages the information related to the growing condition of the lawn 12. The growing condition management section 550 may manage the information related to the growing condition of the lawn 12 in each of a plurality of subareas 204 included in the work region 202. The growing condition management section 550 may manage the information related to the growing condition of the lawn 12 in at least one of a plurality of subareas 204 included in the work region 202.

Examples of the growing condition of the lawn 12 include the growing stage of the lawn 12, the growing status of the lawn 12, and the like. Examples of the information indicating the growing status of the lawn 12 include the color of the lawn 12, the thickness of the lawn 12, the density of the lawn 12, and the like. It can be expected that the load of the work unit 320 increases as the lawn 12 grows better. Therefore, the information indicating the growing status of the lawn 12 may be the information indicating the load of the work unit 320. Examples of the load of the work unit 320 include the load of the work motor 326, the wearing condition of the cutter blade 324, and the like.

The growing condition management section 550 may manage the information related to the growing environment of the lawn 12. Examples of the growing environment of the lawn 12 include the information related to the soil of the subarea 204, and the like.

In the present embodiment, the work plan management section 560 manages the schedule of the work performed by the lawn mower 210. The work plan management section 560 may plan the work schedule of the lawn mower 210. The work plan management section 560 may manage the progress of the work schedule of the lawn mower 210. The work plan management section 560 may plan the work schedule of the watering apparatus 240. The work plan management section 560 may manage the progress of the work schedule of the watering apparatus 240.

The work plan management section 560 may plan the work schedule based on the illuminance parameter of each of a plurality of subareas 204 included in the work region 202. The work schedule may be the information which associates (i) the identification information indicating each of a plurality of subareas 204, (ii) a timing at which the work related to the growing of the lawn 12 is performed in the subarea, and (iii) at least one of the type and intensity of the work in the subarea. The type of work may be at least one of seeding, pruning, lawn mowing, grass cutting, watering, fertilizing, soiling, weeding, and the like. The work plan management section 560 may update the work schedule based on the information obtained by the growing condition management section 550.

While the embodiments of the present invention have been described, the technical scope of the invention is not limited to the above described embodiments. It is apparent to persons skilled in the art that various alterations and improvements can be added to the above-described embodiments. Also, matters explained with reference to a particular embodiment can be applied to other embodiments as long as as long as there is no technical contradiction. For example, what is described for an embodiment of the Fig. 1 can be applied to another embodiment described with reference to another drawing. It is also apparent from the scope of the claims that the embodiments added with such alterations or improvements can be included in the technical scope of the invention.

The operations, procedures, steps, and stages of each process performed by an apparatus, system, program, and method shown in the claims, the specification, or diagrams can be performed in any order as long as the order is not indicated by "prior to," "before," or the like and as long as the output from a previous process is not used in a later process. Even if the operation flow is described using phrases such as "first" or "then" in the claims, the specification, or diagrams, it does not necessarily mean that the process must be performed in this order.

### EXPLANATION OF REFERENCES

10 plant, 12 lawn, 20 communication network, 22 user terminal, 102 work region, 104 subarea, 110 image capturing section, 120 information processing apparatus, 122 image obtaining section, 124 sunshine condition determination section, 200 management system, 202 work region, 204 subarea, 210 lawn mower, 220 image-capturing apparatus, 230 management server, 240 watering apparatus, 302 housing, 312 front wheel, 314 rear wheel, 316 travel motor, 320 work unit, 322 blade disk, 324 cutter blade, 326 work motor, 328 shaft, 330 location adjustment section, 340 battery unit, 350 user interface, 364 image-capturing unit, 366 illuminance sensor, 370 sensor unit, 380 control unit, 410 communication control section, 420 travel control section, 430 work unit control section, 440 input/output control section, 510 communication control section, 520 request processing section, 530 map management section, 540 equipment management section, 550 growing condition management section, 560 work plan management section

## Claims

1. A information processing apparatus, comprising:
an image obtaining section configured to obtain, from an image capturing section which captures at least part of a work region where a plant is grown, data of an image of the at least part of the work region; and
a sunshine condition determination section configured to analyze the data obtained by the image obtaining section and determine a sunshine condition in each of a plurality of subareas included in the at least part of the work region.

2. The information processing apparatus according to claim 1, further comprising:
a map generation section configured to generate map information which associates identification information indicating each of the plurality of subareas and information indicating the sunshine condition in the subarea, based on a sunshine condition in each subarea of the work region determined by the sunshine condition determination section.

3. The information processing apparatus according to claim 1 or 2, further comprising:
a work schedule generation section configured to generate work schedule information which associates (i) identification information indicating each of the plurality of subareas, (ii) a timing when a work related to growing the plant is performed in the subarea, and (iii) at least one of a type and intensity of the work in the subarea, based on a sunshine condition in each subarea of the work region determined by the sunshine condition determination section.

4. The information processing apparatus according to claim 3, wherein
a type of the work is at least one of seeding, pruning, lawn mowing, grass cutting, watering, fertilizing, soiling, and weeding.

5. The information processing apparatus according to claim 3 or 4, further comprising:
a growing condition obtaining section configured to obtain information indicating a real growing condition of the plant in at least one of the plurality of subareas, wherein
the work schedule generation section updates the work schedule information based on information obtained by the growing condition obtaining section.

6. The information processing apparatus according to claim 5, wherein
information indicating a real growing condition of the plant is information indicating a load of a work section which is mounted to the work machine configured to move autonomously and perform the work.

7. The information processing apparatus according to any one of claims 3 to 5, further comprising:
a control section configured to control, based on the work schedule information generated by the work schedule generation section, a work machine which performs a work in the work region.

8. A program which enables a computer to function as the information processing apparatus according to any one of claims 1 to 7.
